# EUROPEAN PATENT APPLICATION

(11) **EP 0 692 800 A2**
(43) Date of publication of application: **17.01.1996**
(21) Application number: 95111113.7
(22) Date of filing: 14.07.1995
(51) Int. Cl.: H01G 9/20

(54) **Surface-modified titanium oxide film, process for producing the same and photoelectric conversion device using the same**

(30) Priority: 15.07.1994 JP 186659/94
(71) Applicant: ISHIHARA SANGYO KAISHA, LTD., Nishi-ku, Osaka (JP)
(72) Inventor: Takaoka, Yoichi, c/o Ishihara Sangyo K.K., Kusatsu-shi (JP); Miyazaki, Hiromitsu, c/o Ishihara Sangyo K.K., Kusatsu-shi (JP)
(74) Representative: Henkel, Feiler, Hänzel & Partner

(57) **Abstract**

A titanium oxide film, the surfaces of which are modified by contacting the film with an etching agent to etch the surfaces thereof, and a process for producing the same are disclosed. The titanium oxide film having the surfaces modified characterized by comprising an etched titanium oxide film having a photosensitizing dye adsorbed on the surfaces thereof and a process for producing the same are also disclosed. A photoelectric conversion device comprising as an electrode of a surface-modified titanium oxide film as described above, a counter-electrode and an electrolyte disposed between said electrode and said counter-electrode is disclosed. The produced titanium oxide films are useful for UV light absorbers, optical materials, electric or electronic materials, photoelectric converter materials, ornamental materials, catalysts, photo-catalysts, catalyst carriers, adsorbents and bioreactors.

## Description

### BACKGROUND OF THE INVENTION

### Field of the Invention

The present invention relates to a titanium oxide film, the surfaces of which are modified, a process for producing the same, and a photoelectric conversion device using the film.

### Description of the Related Art

Titanium oxide films consist of titanium oxide particles fixed on a support and are useful for UV light absorbers, optical materials, electric or electronic materials, photoelectric converter materials, ornamental materials, catalysts, photocatalysts, catalyst carriers, adsorbents, bioreactors and the like.

The titanium oxide films have been produced by various processes, such as a process comprising immersing a support in a solution containing an organic titanium compound, e.g., titanium isopropoxide, removing the impregnated support out of the solution, and then heating it to form a film on the support, or a process comprising spraying a vapor of titanium tetrachloride onto the surface of a support kept at high temperatures to form a film coating, or a process comprising spraying a solution of an organic titanium compound, such as titanium acetylacetonate or titanium alkoxide to form a film, or a process comprising adhering titanium oxide particles onto the surface of a support.

The surfaces of the titanium oxide films contain a number of lattice defects, impurities and hydroxyl group which act as obstacles which make it difficult to realize satisfactory characteristics. For example, when the titanium oxide films are used for photoelectric converter materials, the lattice defects, impurities and hydroxyl group generate surface levels which may lead to a decrease in open circuit voltage with an increase in dark current. Similarly, when a photosensitizing dye is being adsorbed, the lattice defects, impurities and hydroxyl group may cause a reduction in the amount of photosensitizing dye to be adsorbed as well as a reduction in photosensitization efficiency due to hindrance to electron injection. And when the titanium oxide films are used for catalysts, photocatalysts, adsorbents and the like, the lattice defects, impurities and hydroxyl group may cause a reduction in activity and adsorbability.

### SUMMARY OF THE INVENTION

An object of the present invention is to provide a titanium oxide film, the surfaces of which are modified.

Another of the present invention is to provide a process for producing a titanium oxide film, the surfaces of which are modified.

Still another object of the present invention is to provide a photoelectric conversion device using a titanium oxide film having the surfaces modified as electrode.

Still another object of the present invention is to provide a process for improving more effectively and easily the surfaces of a titanium oxide film than the conventional method comprising etching titanium oxide particles followed by forming a film as well as for controlling the amount of hydroxyl group on the surfaces, wherein the process comprises etching the surfaces of a titanium oxide film by contacting the film with an etching agent to reduce the amount of lattice defects and impurities with some hydroxyl groups being controllably replaced by mineral ions.

Still another object of the present invention is to provide a process for increasing the amount of a photosensitizing dye to be adsorbed onto the titanium oxide film to improve photosensitization efficiency by etching the film as described above and then allowing the film to adsorb the photosensitizing dye.

### DETAILED DESCRIPTION OF PREFERRED EMBODIMENTS

As a result of an intensive research for overcoming the aforementioned problems, the present inventors discovered that (1) the surfaces of a titanium oxide film can more effectively and easily be improved by etching the surfaces of the film by contacting the film with an etching agent to reduce the amount of lattice defects and impurities than the conventional method comprising etching titanium oxide particles followed by forming a film, and simultaneously the amount of hydroxyl group on the surfaces can be controlled by replacement with mineral ions, and that (2) the amount of photosensitizing dye to be adsorbed and a photosensitization efficiency can simultaneously be improved by allowing the titanium oxide film to adsorb a photosensitizing dye after etched as described above. The present invention is completed on the basis of this discovery.

The term "titanium oxide" as used herein refers to oxygen-containing titanium compounds such as anatase titanium oxide, rutile titanium oxide, brookite titanium oxide, amorphous titanium oxide, metatitanic acid, orthotitanic acid, titanium hydroxide, hydrous titanium oxide, which may be doped or surface-treated with other elements such as zinc, niobium and the like. When a titanium oxide film from a titanium oxide material doped or surface-treated with other elements is etched, modification of the surfaces of the titanium oxide film can effectively be accomplished by dissolving the other elements out of the surface layer. In view of adhesiveness with a support, the size of titanium oxide particles should preferably be in the range of 5 to 100 nm, more preferably 10 to 50 nm, most preferably 10 to 30 nm. The term "titanium oxide film" as used herein refers to the particles adhered in a film form on a support. The crystalline type of titanium oxide film may be either anatase or rutile, even or a mixture of both, and can optionally be varied by selecting the crystalline type of titanium oxide particles to be used, or by optionally setting conditions for firing the particles on a support to fix them. Moreover, the thickness, transparency, and the porosity as expressed by the surface area of a titanium oxide film can optionally be varied by selecting conditions such as the concentration of a titanium oxide dispersion to be used, particle size and the like. The thickness of a titanium oxide film should preferably be in the range of about 0.5 to 50 µm. When titanium oxide films are used for photoelectric converter materials, catalysts, photocatalysts, catalyst carriers and adsorbents, their porosity should preferably be higher and preferably range from about 10 to about 10000 cm² as expressed by the surface area of titanium oxide film per cm² of a support, more preferably from 50 to 10000 cm².

The supports on which titanium oxide particles are deposited in the present invention may optionally be selected for their materials, configuration and dimensions depending upon end use and application. For example, their materials may be made of glass, metal, ceramic, plastic, wood or the like. The supports may have a configuration of sheet, small pieces, sphere or beads.

In the present invention titanium oxide films to be used may be those produced by conventional methods. The conventional methods to be used include (1) a method comprising spraying or coating a decomposable organic titanium compound on a support and decomposing the compound, (2) a method comprising immersing a support in a solution of titanium alkoxide or titanium acetonate and drying the impregnated support, (3) a method comprising evaporating titanium halide or an organic titanium compound to deposit titanium oxide particles on a support, (4) a method comprising gelling a titanium oxide sol on a support, (5) a method comprising hydrolyzing or neutralizing a titanium compound, in the presence of seeds if necessary, to produce titanium oxide particles which are sprayed or coated on a support, then dried, and if necessary, fired, (6) a method comprising spraying or coating titanium oxide particles with a binder onto a support and drying. Preferably, in the present invention the titanium oxide particles obtained in the method (5) as described above are fired at a temperature of 200 to 600 °C , or treated hydrothermally at a temperature of 100 °C or higher to grow titanium oxide particles which are sprayed or coated on a support, then dried and fired to fix firmly the particles in a titanium oxide film on the support.

In one embodiment, the present invention lies in a titanium oxide film, the surfaces of which are modified by contacting with an etching agent to etch the surfaces. The etching agents to be used include mineral acids such as sulfuric acid, hydrochloric acid, hypochlorous acid, nitric acid, and hydrofluoric acid, and ammonium salts or amine salts of mineral acids such as ammonium fluoride, acid ammonium fluoride, and hydrogen fluoride, fluorine and hydrogen chloride. In the present invention, mineral acids or salts thereof are preferred. Particularly the use of hydrofluoric acid or salts thereof such as ammonium fluoride and acid ammonium fluoride is preferred because it may result in reduced lattice defects and impurities with substitution of fluorine or fluoride ions for hydroxyl groups present on the surfaces of the titanium oxide film enabling fluoride to bond to the surfaces of the titanium oxide film. The bound fluoride prevents moisture and contaminants from adhering to the surfaces.

The contacting titanium oxide films with an etching agent as described above may be conducted by immersing the titanium oxide films in a liquid containing the etching agent, or by flowing a gaseous etching agent on the titanium oxide films. The temperature for etching treatment may be set optionally, but is generally in the range of 0 to 110 °C , preferably room temperature to 80 °C, more preferably room temperature to 60 °C . The length of time of etching treatment may be optionally set, but is generally in the range of 0.05 to 48 hours, preferably 0.1 to 12 hours, more preferably 0.1 to 5 hours. In addition of the etching agent there may be added a buffer such as ammonia and amines. When an aqueous solution of mineral acid is used, the concentration of mineral acid is preferably in the range of 0.0005 to 20 N, more preferably 0.001 to 10 N, even more preferably 0.01 to 5 N, most preferably 0.01 to 2 N. A concentration of mineral acid lower than 0.0005 N undesirably makes it difficult to achieve desired effects, while a concentration of mineral acid higher than 20 N may undesirably cause too much dissolution of the titanium oxide films. After the titanium oxide films were contacted with a solution of an etching agent, the solution may be neutralized. This neutralization can reprecipitate the titanium component, which has been etched out of the titanium oxide films into the solution of etching agent and present therein, onto the surfaces of the titanium oxide films.

The etched titanium oxide films may be separated from the etching agent, washed and dried, if necessary. Moreover, in a preferred embodiment, the surface modified titanium oxide films may be heated. Particularly, when the titanium oxide films are surface-modified by contacting with hydrofluoric acid or a salt thereof such as ammonium fluoride or acid ammonium fluoride, the fluorine bonded to the surfaces of the titanium oxide films can easily be removed by heating, and the resulting fluorine-free titanium oxide films with none of moisture and contaminants being adhered are very active films. The heating temperature should preferably be in the range from 40 to 1000 °C , more preferably from 200 to 600 °C . The heating may be conducted in a gaseous atmosphere such as air, oxygen, nitrogen, hydrogen, argon, helium, and steam, the heating in an atmosphere of dried gas having a low moisture content being preferred. The heating renders the surfaces of the titanium oxide films much more modified. For example, the hydroxyl group present on the surfaces of the titanium oxide films can be removed. In this way, one can obtain a titanium oxide film having its surfaces modified.

Onto the thus obtained titanium oxide film having its surfaces modified may be adsorbed a photosensitizing dye. The term "photosensitizing dye" as used herein refers to a dye which can exhibit absorption in the visible light range and/or the infrared range. The photosensitizing dyes to be used include metal complexes and organic dyes. The metal complexes include metal phthalocyanines such as copper phthalocyanine and titanyl phthalocyanine, chlorophyll and its derivatives, hemin as well as complexes of ruthenium, osmium, iron, and zinc as disclosed in U.S. Patent No. 4,927,721, U.S. Patent No. 5,084,365 and WO 91/16719. The organic dyes to be used include metal-free phthalocyanines, cyanine dyes, merocyanine dyes, xanthene dyes, and triphenylmethane dyes. As cyanine dyes, NK3422, NK3203 and NK1194 (which are all available from NIPPON KANKOH SHIKISO KENKYUSHO Co., Ltd.) may practically be mentioned. As merocyanine dyes, NK2426 and NK2501 (which are all available from NIPPON KANKOH SHIKISO KENKYUSHO Co., Ltd.) may practically be mentioned. As xanthene dyes, one may practically make mention of uranin, eosine, rose bengal, rhodamine B, and dibromo-fluorescein. As triphenylmethane dyes, mention can practically be made of malachite green and crystal violet. For the purpose of the present invention the aforementioned metal complexes are preferred because of their excellent photosensitizing effect and durability. And photosensitizing dyes having functional groups such as carboxyl, hydroxylalkyl, hydroxyl, sulfone, carboxylalkyl groups are preferred because they are promptly adsorbed onto the titanium oxide films. In the present invention one or more of the photosensitizing dyes may be used.

After etching, the obtained titanium oxide film having its surfaces modified is brought into contact with photosensitizing dye which is adsorbed onto the film. The contacting with photosensitizing dye may be made by immersing the titanium oxide film having its surfaces modified in a solution of photosensitizing dye, or by flowing a gaseous photosensitizing dye on the film. In the present invention the etched titanium oxide films are immersed in a liquid containing photosensitizing dye and the liquid may be heated to allow the photosensitizing dye to be promptly adsorbed. The liquids to be used are not critical so long as they can dissolve the photosensitizing dye, and practically water, alcohol, toluene, dimethylformamide can be used. The heating temperature should preferably be in the range from 40 °C to the boiling point of a selected liquid, more preferably from 60 °C to the boiling point, most preferably from 10 °C lower than the boiling point to the boiling point. This heating should preferably be conducted under reflux. The time of heating may be optionally set with a suitable time being in the range of approximately 2 minutes to 48 hours. The thus obtained titanium oxide film having photosensitizing dye adsorbed may be separated from the solution of photosensitizing dye, washed, dried, and/or evaporated to dryness, if necessary.

In still another embodiment, the present invention lies in a photoelectric conversion device with an electrode composed of the aforementioned titanium oxide film, a counter-electrode, and an electrolyte disposed therebetween. The term "photoelectric conversion device" as used here refers to an element capable of converting light energy to electric energy through an electrochemical reaction. Exposing the photoelectric conversion device to light causes activation of electrons at the surface-modified titanium oxide film electrode, then the electrons are transferred from the film electrode to the counter-electrode through leads provided therebetween. The electrons which reached the counter-electrode are carried on anions in the electrolyte. In this way the light is converted to the electric energy. Moreover, if a redox pair is present in the electrolyte, the electrons after reached the counter-electrode reduce an oxidant which is one of components composing the redox pair resulting in formation of a reductant. The reductant is oxidized at the titanium oxide film electrode to be restored to the oxidant. In this way the photoelectric conversion device with a redox pair can continuously convert light energy to electric energy and can be used as a solar cell. The titanium oxide film electrode used in the photoelectric conversion device should preferably be made of a photosensitizer-adsorbed titanium oxide film for higher utilization of light energy. The counter-electrode to be used may be a glass sheet coated with a transparent electroconductive film and the like. The electrolytes to be used include various electrolytes such as cations, for example, lithium ions and anions, for example, chloride ions and the like. The redox pairs to be present in the electrolyte include iodine-iodine compound, bromine-bromine compound and the like.

The present invention is further described with reference to Examples without being limited thereto.

### Example 1

Titanyl sulfate is thermally hydrolyzed to produce a titanium oxide sol. This sol was neutralized with ammonia, filtrated, washed and then fired at a temperature of 450 °C to produce titanium oxide particles. The titanium oxide particles had a size of 15 nm.

The titanium oxide particles were dispersed in water to produce a dispersion. The dispersion was coated on an electroconductive glass, then fired at a temperature of 450 °C to produce a titanium oxide film. This titanium oxide film had a thickness of 10 µm and a surface area of 1000 cm² per cm² of the support.

The produced titanium oxide film was immersed in an aqueous 0.5 N hydrofluoric acid solution for 15 minutes to etch the film, then removed from the solution, and washed to produce a titanium oxide film having its surfaces modified.

Onto this surface-modified titanium oxide film was adsorbed a ruthenium complex as expressed by Ru(II) (bipyridine-dicarboxylic acid)₂ (isothiocyanic acid)₂ to produce a dye-sensitized titanium oxide film (Sample A).

### Example 2

A titanium oxide sol obtained by thermally hydrolyzing titanyl sulfate was adjusted with nitric acid to a pH of 1.5, then placed in an autoclave, subjected to hydrothermal treatment at a temperature of 180 °C for 13 hours to produce a sol containing grown titanium oxide particles. The titanium oxide particles had a size of 16 nm. The produced sol was neutralized with ammonia, filtrated and washed. This titanium oxide cake was dispersed in water to produce a dispersion. The dispersion was coated on an electroconductive glass, then fired at a temperature of 600 °C to produce a titanium oxide film (Sample 1).

The produced titanium oxide film was immersed in an aqueous 0.1 N hydrochloric acid solution to etch the film under reflux for 16 hours, then removed from the solution, and washed to produce a titanium oxide film having its surfaces modified. This titanium oxide film had a thickness of 11 µm and a surface area of 1000 cm² per cm of the support.

Onto this surface-modified titanium oxide film was adsorbed a ruthenium complex as expressed by Ru(II) (bipyridine-dicarboxylic acid)₂ (isothiocyanic acid)₂ to produce a dye-sensitized titanium oxide film (Sample B).

### Example 3

The titanium oxide film obtained from Example 1 was immersed in an aqueous 0.5 N hydrofluoric acid solution for 15 minutes to etch the film, then removed from the solution, washed, and heated in an atmosphere of oxygen at 500 °C for one hour to produce a titanium oxide film having its surfaces modified.

This surface-modified titanium oxide film was immersed in an ethanol solution of a ruthenium complex photosensitizing dye as expressed by Ru(II) (bipyridine-dicarboxylic acid)₂ (isothiocyanic acid)₂, then heated to the boiling temperature and maintained at that temperature under reflux for 15 minutes, and thereafter removed from the solution to produce a dye-sensitized titanium oxide film (Sample C).

### Comparative Example 1

Sample 1 from Example 2 was used as a contrast sample. Onto the Sample 1 was adsorbed the photosensitizing dye identically to Example 2 to produce a dye-sensitized titanium oxide film (Sample D).

When Sample A from Example 1 was used, it adsorbed an amount of the photosensitizing dye of 91 µg/cm². When Sample B from Example 2 was used, it adsorbed an amount of the photosensitizing dye of 81 µg/cm². Moreover, when Sample C from Example 3 was used, it adsorbed an amount of the photosensitizing dye of 110 µg/cm². In contrast, when Sample D from Comparative Example 1 was used, an amount of the photosensitizing dye adsorbed was 65 µg/cm².

Next, the titanium oxide films were investigated for bond conditions between the photosensitizing dye and the surfaces of the titanium oxide film by means of IR spectrometer in the wave number range from 1200 to 2200 cm⁻¹ according to a normal reflective method. The photosensitizing dye used had a -COOH group and was considered to be adsorbed via the group to the titanium oxide film. It was observed that all the samples exhibited absorption bands of the C=O stretching vibrations and the O-C-O antisymmetric stretching vibrations due to a -COOH group. However, the samples (A to C) of Examples of the present invention exhibited more intensive absorption bands of the C=O stretching vibrations than those of the O-C-O antisymmetric stretching vibrations while the sample D of Comparative Example exhibited conversely more intensive absorption bands of the O-C-O antisymmetric stretching vibrations. It may be estimated from this fact that the samples of Examples of the present invention had stronger bonds between the photosensitizing dye and the surfaces of the titanium oxide films due to enhanced ester linkage.

From the foregoing, it has been found that the titanium oxide films etched in according to the present invention have the modified surfaces and enhanced surface activity as compared with those of Comparative Example since they have an increased amount of photosensitizing dye adsorbed and a higher bond strength of the photosensitizing dye to the surfaces. Moreover, the heating after the etching treatment has been found to further improve the surface activity. These facts indicate that the titanium oxide films according to the present invention are very useful for catalysts and photocatalysts, catalyst carriers, adsorbents and photoelectric conversion devices which are required to have surface reactivity.

Next, each of the samples obtained in Examples and Comparative Example (A, B, C and D) as described above was superimposed over a transparent electroconductive glass for counter-electrode with an electrolyte containing an iodine-iodide ion redox pair being interposed therebetween, and all sides of the assembly were sealed with a resin, and leads were attached to complete a photoelectric conversion device.

The aforementioned photoelectric conversion devices were evaluated for current-voltage characteristics by illuminating with rays of light having a wavelength distribution of AM 1.5 at a light intensity of 100 W/m².

When the sample A of Example 1 was used, a short circuit current was 1.42 mA/cm² and a conversion efficiency was 6.3 %. When the sample B of Example 2 was used, a short circuit current was 1.35 mA/cm² and a conversion efficiency was 5.4 %. When the sample C of Example 3 was used, a short circuit current was 1.51 mA/cm² and a conversion efficiency was 6.3 %. In contrast, when the sample D of Comparative Example 1 was used, a short circuit current was 1.18 mA/cm² and a conversion efficiency was 4.6 %.

Furthermore, the aforementioned photoelectric conversion devices were evaluated for the intensity of photoluminescence emitted from the devices when exposed to a monochromatic light having a wavelength of 530 nm at a light intensity of about 20 mW/cm². In this evaluation, the emitted photoluminescence was spectroscopically analyzed by means of a double monochrometer in the wavelength range from 600 nm to 1000 nm and the spectrum intensities were determined by a photomultiplier. The intensity of photoluminescence when the samples of the present examples were used was not higher than one half that when the sample of Comparative Example 1 was used. The photoluminescence is emitted in the course of recombination between the electrons and the holes which have been activated through excitation of the photosensitizing dye due to light absorption and not injected into the titanium oxide film. It could be appreciated from this fact that the photoelectric conversion devices using the samples of the examples according to the present invention adsorbed a higher proportion of effective dye for photosensitization than those using the sample of Comparative Example.

It has been found from the foregoing that the titanium oxide films which are obtained by etching and then adsorbing a photosensitizing dye in accordance with the present invention have a higher amount of the photosensitizing dye adsorbed which is capable of effectively contributing to photosensitization as compared to the contrast, and the use of such titanium oxide films as electrodes results in improved photoelectric conversion properties. From this fact, it has been found that they are useful as electrodes for photoelectric conversion devices such as solar cells, photochemical cells, and electrodes for electrochemical electrodes.

It has been found, moreover, that the photoelectric conversion devices with the titanium oxide films having the surfaces modified according to the present invention have an excellent current-voltage characteristics so that they are useful for solar cells and the like.

The present invention provides a surface-modified titanium oxide film by contacting a titanium oxide film with an etching agent to etch the surfaces of the film. The titanium oxide film is useful for UV light absorbers, optical materials, electric or electronic materials, photoelectric converter materials, ornamental materials, catalysts, photo-catalysts, catalyst carriers, adsorbents, bioreactors and the like. Thus it is very useful in a variety of applications in industry as well as at home.

The present invention also provides a process for producing a surface-modified titanium oxide film. The process is advantageously capable of producing a titanium oxide film having excellent properties with ease.

Moreover, the present invention provides a photoelectric conversion device which has excellent photoelectric conversion properties and can inexpensively be produced so that it is useful for solar cells and the like.

## Claims

1. A titanium oxide film, the surfaces of which are modified by contacting the film with an etching agent to etch the surfaces thereof.

2. The titanium oxide film having the surfaces modified according to Claim 1, wherein said etching agent is mineral acid or salt thereof.

3. The titanium oxide film having the surfaces modified according to Claim 2, wherein said mineral acid is hydrofluoric acid.

4. The titanium oxide film having the surfaces modified according to Claim 1, wherein said titanium oxide film is formed on a support and has a surface area of 10 to 10000 cm² per cm² of the support.

5. The titanium oxide film having the surfaces modified according to Claim 1, wherein said titanium oxide film comprises an etched titanium oxide film having a photosensitizing dye adsorbed on the surfaces.

6. A process for producing a surface-modified titanium oxide film comprising etching the surfaces of a titanium oxide film by contacting with an etching agent and then heating the etched titanium oxide film.

7. A process for producing a surface-modified titanium oxide film comprising etching the surfaces of a titanium oxide film by contacting said film with an etching agent, then immersing the resulting titanium oxide film in a liquid containing a photosensitizing dye and heating the liquid to adsorb said photosensitizing dye on the surfaces of the film.

8. A process for producing a surface-modified titanium oxide film comprising etching the surfaces of a titanium oxide film by contacting with an etching agent, then heating the etched titanium oxide film, immersing the resultant film in a liquid containing a photosensitizing dye, and heating said liquid to adsorb said photosensitizing dye on the surfaces of the film.

9. A photoelectric conversion device comprising an electrode of a surface-modified titanium oxide film produced by a process according to any one of Claims 1 to 5 and 6 to 8, a counter-electrode and an electrolyte disposed between said electrode and said counter-electrode.
